(19) **Europäisches Patentamt**

**European Patent Office**

**Office européen des brevets**

(11) **EP 1 516 800 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
**B62D 6/00** *(2006.01)*

(21) Anmeldenummer: **04103524.7**

(22) Anmeldetag: **22.07.2004**

(54) **Verfahren zur Durchführung einer Giermomentenkompensation für ein Kraftfahrzeug**

Method of providing a yaw moment compensation for a vehicle

Méthode de compensation d'un moment de lacet d'un véhicule

(84) Benannte Vertragsstaaten:
**DE FR GB IT**

(30) Priorität: **17.09.2003 DE 10342999
19.02.2004 DE 102004008045**

(43) Veröffentlichungstag der Anmeldung:
**23.03.2005 Patentblatt 2005/12**

(73) Patentinhaber: **Bayerische Motoren Werke
Aktiengesellschaft
80809 München (DE)**

(72) Erfinder: **Pischinger, Martin
80935, München (DE)**

(56) Entgegenhaltungen:
**EP-A- 1 426 258        WO-A1-20/04005093
WO-A1-20/04089725        DE-A- 19 751 227
US-A- 5 089 967        US-A- 5 388 658
US-A1- 2003 107 265**

**Beschreibung**

Die Erfindung betrifft ein Verfahren zur Durchführung einer aufgrund unterschiedlicher Rad-Drehzahlen auf der linken und der rechten Seite eines zweispurigen Kraftfahrzeugs erforderlichen Giermomentenkompensation mittels eines Lenksystems, das die Einstellung eines fahrerunabhängigen Lenkwinkels an lenkbaren Fahrzeugrädern ermöglicht. Zum technischen Umfeld wird neben der DE 197 51 227 A1 beispielshalber auf die DE 103 03 154 A1 verwiesen, daneben auf die gemäß Artikel 54(3) EPÜ nicht vorveröffentlichten Schriften WO 2004/089725 A und WO 2004/005093 A.

Die vorliegende Erfindung findet bei sog. aktiven Lenksystemen zweispuriger Kraftfahrzeuge Verwendung, bei denen ein von einer Vorgabe des Fahrers unabhängiger Lenkwinkel an lenkbaren Rädern des Kraftfahrzeugs eingestellt werden kann. Insbesondere kann es sich bei einem solchen aktiven Lenksystem um eine sog. Überlagerungslenkung handeln, so wie dies auch in der oben erstgenannten Schrift erwähnt ist. Bei derartigen aktiven Lenksystemen kann eine Stabilisierungsfunktion implementiert sein, die bei ABS-Bremsungen (Antiblockiersystem-Bremsungen) auf unterschiedlichen Reibwerten der rechten und linken Fahrzeugseite eine Kompensation des hierdurch auftretenden Stör-Giermomentes durch gezielte Lenkeingriffe vornimmt, nämlich die sog. Giermomentenkompensation. Daneben oder hauptsächlich jedoch erfolgt eine Stabilisierung eines mehrspurigen Kraftfahrzeugs über ein sog. "aktives" Lenksystem anhand eines Vergleichs einer tatsächlichen, gemessenen Gierbewegungsgröße des Fahrzeugs mit einer anhand der aktuellen Randbedingungen berechneten Soll- Gierbewegungsgröße.

Unerwünschte Gierbewegungen eines zweispurigen Kraftfahrzeugs können nicht nur aus unterschiedlichen durch ein Fzg.-Bremssystem eingeleiteten Bremskräften an den Rädern der linken bzw. rechten Fahrzeugseite resultieren, sondern auch aus asymmetrischem Antriebsschlupf, d.h. falls die beidseitigen Antriebsräder das üblicherweise über ein Differential gleichmäßig verteilte Antriebsmoment des Fzg.-Antriebsaggregats aufgrund unterschiedlicher Bodenhaftung (resultierend aus unterschiedlichen Reibwerten) in unterschiedliche Vortriebskräfte auf der linken bzw. rechten Fahrzeugseite umsetzen. Tritt also während einer Beschteunigungsphase des Fahrzeugs asymmetrischer Schlupf der Antriebsräder auf, so entsteht ein Giermoment, das eine Gierbeschleunigung des Fahrzeugs bewirkt.

Um kritische Fahrzustände, die aus einem solchen sog. Antriebs-Giermoment entstehen könnten, zu verhindern, wird im bekannten Stand der Technik bei Erkennen von Antriebs-Schlupf an den Antriebsrädern zunächst das vom Fzg.-Antriebsaggregat abgegebene Antriebsmoment um ein gewisses Maß reduziert und bei dann weiterhin vorliegendem Antriebsschlupf erfolgt ein radindividueller Bremseingriff. Dies ist dem Fachmann unter dem Begriff der sog. Antriebs-Schlupfregelung ("ASR"), die ebenfalls in der eingangs zweitgenannten Schrift genannt ist, bekannt.

Bei Aktivierung dieser bekannten Antriebs-Schlupfregelung, wobei also das vom Antriebsaggregat abgegebene Antriebsmoment reduziert und ggf. eine Bremskraft an die Antriebsräder angelegt wird, wird zwangsläufig die erzielbare Fahrzeugbeschleunigung herabgesetzt. Somit ergibt sich also der Zielkonflikt, dass einerseits eine hohe Fahrstabilität (verbunden mit hohem Fahrkomfort) erreicht werden soll, dass aber andererseits auch bei niedrigen Reibwerten zwischen Rad und Fahrbahn (bspw. im Winter bei Schnee und Eis) eine möglichst hohe FahrzeugBeschleunigung möglich sein soll. Mit der herkömmlichen Antriebs-Schlupfregung ist lediglich ein Kompromiss zwischen diesen beiden Zielen erreichbar.

Grundsätzlich könnte bei Auftreten von asymmetrischem Antriebsschlupf anstelle einer Reduzierung des Antriebsmoments und ggf. eines Bremseingriffs versucht werden, das Fahrzeug über das aktive Lenksystem zu stabilisieren, d.h. dadurch, dass unabhängig von der Vorgabe des Fahrers ein Lenkwinkel oder Zusatz-Lenkwinkel eingestellt wird, mit Hilfe dessen ein aus einem asymmetrischem Antriebsschlupf resultierendes sog. Stör-Giermoment kompensiert werden kann, jedoch ist es hierfür erforderlich, die Größe und Richtung des benötigten Kompensations-Giermoments zu kennen. Während die Richtung, d.h. der Drehsinn noch einfach aus einem Vergleich der Drehzahlen zwischen dem (oder den) linksseitigen und dem (oder den) rechtsseitigen Antriebsrad (bzw. Antriebsrädern) bestimmt werden kann, ist für die Ermittlung des Betrags des sog. Stör-Giermoments (bzw. des dementsprechenden Kompensations-Giermoments) aus asymmetrischem Antriebsschlupf ein sinnvoller Ansatz erforderlich, den aufzuzeigen sich die vorliegende Erfindung zur Aufgabe gestellt hat

Die Lösung dieser ersten Aufgabe ist für ein Verfahren zur Durchführung einer aufgrund unterschiedlicher Rad-Drehzahlen auf der linken und der rechten Seite eines zweispurigen Kraftfahrzeugs erforderlichen Giermomentenkompensation mittels eines Lenksystems, das die Einstellung eines fahrerunabhängigen Lenkwinkels an lenkbaren Fahrzeugrädern ermöglicht, dadurch gekennzeichnet, dass das durch geeignete Ansteuerung des Lenksystems zu kompensierende Giermoment aus den an den durch das Fahrzeug-Antriebsaggregat beschleunigten Rädern anliegenden Kräften unter Berücksichtigung des Trägheitsmomentes sowie der Winkelbeschleunigung der betroffenen Fahrzeug-Räder ermittelt wird.

Grundsätzlich kann mit den Unterschieden der an den beidseitigen Rädern anliegenden Kräfte, insbesondere Bremskräfte und Antriebskräfte, ein aus diesen asymmetrischen Kräften resultierendes Stör-Giermoment rechnerisch bestimmt werden. Die Bremskräfte alleine sind bekanntlich relativ einfach ermittelbar, nämlich entweder aus direkt sensierten Bremsdrücken oder aus anderen geeigneten vorliegenden Messdaten, so im Falle einer hydraulischen Bremsanlage aus den entsprechenden Ventilöffnungszeiten, dem hydraulischen Vordruck und den entsprechenden geometrischen Daten, so wie dies auch in der o.g.

DE 197 51 227 A1 erwähnt ist. Zunächst komplizierter hingegen scheint sich die Ermittlung der Antriebskräfte bzw. des Unterschieds der Antriebskräfte zwischen dem linksseitigen und rechtsseitigen Antriebsrad (bzw. den jeweiligen Antriebsrädern) darzustellen, jedoch wurde erkannt, dass hierfür die Berücksichtigung der Trägheitsmomente sowie der Winkelbeschleunigungen der jeweiligen Räder ausreichend sind.

Zum Nachweis dessen diene die folgende Ableitung, die auch zur ausreichend genauen Berechnung eines bei signifikanten Drehzahlunterschieden vorliegenden Stör-Giermomentes herangezogen wird bzw. werden kann. Dabei ist in der folgenden Gleichung (1) die Momentenbilanz um die Drehachse jedes angetriebenen Rades dargestellt:

$$(1) \qquad 0 = M_{Rad,\,Antrieb} - F_{Fahrbahn} \bullet r_{Rad} - F_{Br} \bullet r_{Br} - \Theta_{Rad} \bullet (d^2\phi/dt^2{}_{Rad})$$

mit

$M_{Rad,\,Antrieb}$ = Antriebsmoment am Rad

$F_{Fahrbahn}$ = Kraft, die von der Fahrbahn auf das Rad übertragen wird

$r_{Rad}$ = dynamischer Abrollradius des Rades

$F_{Br}$ = Kraft durch Betätigung der Rad-Bremse

$r_{Br}$ = Radius, an dem die Bremskraft am Rad angreift

$\Theta_{Rad}$ = Trägheitsmoment des Rades

$(d^2\phi/dt^2{}_{Rad})$ = Winkelbeschleunigung des Rades

"•" verdeutlicht eine Multiplikation, "-" steht für eine Subtraktion

Tritt im Falle asymmetrischer Kraftverteilung zwischen dem linken und rechten Antriebsrad des Kraftfahrzeugs ein Giermoment auf, so lässt sich dieses durch die Momentenbilanz um den Fahrzeug-Schwerpunkt bestimmen. Die folgende Gleichung (2) gibt diese Momentenbilanz vereinfacht für ein Kraftfahrzeug mit Hinterradantrieb ohne Brems-eingriff an den Fzg.-Vorderrädern an, jedoch ist unabhängig hiervon die vorliegende Erfindung in gleicher Weise auch für zweispurige, zweiachsige Kraftfahrzeuge mit Allrad-Antrieb und mit gleichzeitigen Bremseingriffen sowohl an den Hinterrädern als auch an den Vorderrädern anwendbar:

$$(2) \qquad 0 = M_{Gier} - (F_{Fahrbahn,\,rechts} - F_{Fahrbahn,\,links}) \bullet s/2$$

mit

$M_{Gier}$ = Giermoment (= sog. Stör-Giermoment)

$F_{Fahrbahn,\,rechts}$ bzw. $P_{Fahrbahn,links}$ = Kraft, die von der Fahrbahn auf das rechte bzw. linke Rad wirkt

s = Spurweite des Fahrzeugs

"/" verdeutlicht eine Division

Berücksichtigt man nun, dass ein üblicherweise in der Antriebsachse zwischen den angetriebenen Rädern vorgesehenes Differential eine gleichmäßige Verteilung des vom Fzg.-Antriebsaggregat bereitgestellten Antriebsmoments auf die beiden Antriebsräder vornimmt und setzt die dementsprechend modifizierten Gleichungen (1) für das linke bzw. rechte Antriebsrad in die Gleichung (2) ein, so entfällt der Term "$M_{Rad,Antrieb}$" und es ergibt sich die folgende Gleichung (3) zur Ermittlung des Stör-Giermoments bei asymmetrischem Antriebsschtupf für ein zweispuriges Kraftfahrzeug mit Hinterrad-Antrieb:

(3):

$$M_{Gier} = (s/(2 \bullet r_{Rad})) \bullet (r_{Br} \bullet (F_{Br,li} - F_{Br,re}) + \Theta_{Rad} \bullet (d^2\phi/dt^2{}_{Rad,li} - d^2\phi/dt^2{}_{Rad,re}),$$

("+" steht dabei für eine Addition),

wobei vorausgesetzt ist, dass die Größen "$r_{Rad}$", "$r_{Br}$" und "$\Theta_{Rad}$" für das linke und rechte Rad gleich sind.

Wie diese Gleichung (3) belegt, kann also in Kenntnis des Trägheitsmomentes der betroffen Räder des Fahrzeugs sowie in Kenntnis von deren einfach durch Messung der Drehzahl ermittelbarer Winkelbeschleunigung und der - wie weiter oben ausgeführt - ebenfalls relativ einfach ermittelbaren Bremskräfte an diesen Rädern ein aus asymmetrischem Antriebsschlupf resultierendes Stör-Giermoment errechnet werden, welches dann - wie weiterhin vorgeschlagen wird - durch ein sog. aktives Lenksystem durch Einstellung eines entsprechenden von der Vorgabe des Fahrers unabhängigen Lenkwinkels kompensiert werden kann. Dann ist es nicht erforderlich, zur Stabilisierung des Fahrzeugs das vom Fzg.-Antriebsaggregat abgegebene Antriebsmoment zu reduzieren oder darüber hinaus radindividuelle Bremseingriffe zu tätigen, wenngleich diese Maßnahmen unterstützend insbesondere dann, wenn das sog. Stör-Giemnoment sehr hoch zu werden droht, weiterhin ergriffen werden können.

Klar ersichtlich ist, dass die Bestimmungs-Gleichung (3) auch im Falle eines "negativen" vom Fahrzeug-Antriebsaggregat eingeleiteten Momentes Güitigkeit hat, d.h. auch für das sog. Motor-Schleppmoment, welches bekanntlich eine Abbremsung des Fahrzeuges bewirkt. Somit ist auch bei aus einem Motor-Schleppmoment resultierenden asymmetrischen Radschlupf eine Giermomentenkompensation der beschriebenen Art möglich.

An dieser Stelle sei kurz auf die gemäß Artikel 54(3) EPÜ nicht vorveröffentlichte WO 2004/089725 A1 hingewiesen, die eine Ansteuerlogik für eine elektromotorische Hilfskraft-Lenkung (EPS) eines Kraftfahrzeugs beschreibt, mit der eine Stabilisierung des Fahrzeugs durchführbar sein soll, indem, die elektrische Hilfskraftlenkung ein geeignetes Lenkmoment erzeugt. Hinsichtlich der Merkmale des unabhängigen Anspruchs 1 ist bei diesem vorbeschriebenen, jedoch nicht vorveröffentlichten System in Abweichung von der vorliegenden Erfindung eine Einstellung eines fahrerunabhängigen Lenkwinkels an den lenkbaren Fahrzeug-Rädern nicht möglich es, soll doch ein Lenkmoment erzeugt werden, mit dem das Fahrzeug stabilisiert werden könnte, bzw. es soll zumindest ein solches Lenkmoment erzeugt werden, dass Störeinflüsse für den Fahrer nicht mehr unangenehm spürbar sind. Bei der Ermittlung dieser Störeinflüsse oder Störgrößen wird neben den an den Fahrzeug-Rädern angreifenden Längskräften auch das Rad-Trägheitsmoment sowie die Rad-Drehbeschleunigung bzw. Rad-Winkelbeschleunigung berücksichtigt.

Grundsätzlich einfacher als bei einer Kompensation eines aus unterschiedlichem Antriebsschlupf resultierenden Stör-Giermoments stellen sich die Verhältnisse im Fall eines aus Bremsvorgängen auf unterschiedlichen Reibwerten resultierenden Stör-Giermoments dar. Hier wird nämlich das Stör-Giermoment durch die Krafteinwirkung von der Fahrbahn auf die (zumeist) vier Räder des Fahrzeuges übertragen. Die Berechnung der Kräfte auf die jeweiligen Räder erfolgt üblicherweise über den Ansatz, dass die gemessenen radindividuellen Bremsdrücke der vier Radbremsen als proportional zu den vier Kräften der Fahrbahn auf die vier Räder angenommen werden. Hierbei wird unterstellt, dass durch die ABS-Regelung die radindividuellen Bremsdrücke so geregelt werden, dass ein geringer Schlupf der Räder vorliegt. Dieses bislang übliche Verfahren ist jedoch nur dann korrekt, wenn die ABS-Regelung sicherstellt, dass alle Räder nur einen geringen Schlupf haben, bzw. keine großen Drehbeschleunigungen aufweisen. Nur in diesem Fall ist die Annahme korrekt, dass der radindividuelle Bremsdruck proportional zur radindividuellen Bremskraft ist, die auf die Fahrbahn übertragen wird. Jedoch lässt ein ABS-Regler, der auf minimalen Bremsweg abgestimmt ist, kurzzeitig auch einen größeren Schlupf der Räder zu und ist somit relativ ungenau.

Genauer ist demgegenüber ein in der WO 2004/005093 A beschriebenes Verfahren. In dieser Schrift, die hinsichtlich der Merkmale des unabhängigen Patentanspruchs 2 der vorliegenden Erfindung, auf den nun im weiteren eingegangen wird, gemäß Artikel 54(3) EPÜ nicht vorveröffentlicht ist, ist ein Verfahren zum Erhöhen der Stabilität eines Fahrzeugs bei gebremster Fahrt beschrieben, bei dem anhand von mehreren Eingangsgrößen Kompensations-Lenkwinkel für ein regelbares und/oder steuerbares Lenksystem ermittelt werden, so dass durch (fahrerunabhängige) Lenkeingriffe die Fahrstabilität erhöht wird. Zur Bestimmung eines zu kompensierenden sog. Störgiermoments werden dabei die Bremskräfte an den Fahrzeug-Rädem geschätzt, wobei in dieser Schätzung auch das Trägheitsmoment und die Drehbeschleunigung (= Winkelbeschleunigung) der Räder berücksichtigt wird.

Die weiter oben zusammen mit den Gleichungen (1), (2) und (3) geschilderten Zusammenhänge gelten nämlich auch bei reinen Bremsvorgängen, d.h. dann, wenn an die den einzelnen Rädern zugeordneten Radbremsen eine Bremskraft angelegt wird. Wie weiter oben vorschlagen, kann also zur Steigerung der Genauigkeit gegenüber dem bislang üblichen Stand der Technik auch hierbei das Massenträgheitsmoment des jeweiligen Rades berücksichtigt werden. Es kann somit das zu kompensierende Giermoment aus den an den abgebremsten, sich jedoch im wesentlichen drehenden Rädern anliegenden Fahrbahnkräften ($F_{Fahrbahn}$) ermittelt werden, bei deren Berechnung gemäß folgender Gleichung (4) das jeweilige Rad-Massenträgheitsmoment mit berücksichtigt wird

(4):

$$F_{Fahrbahn} = \frac{r_{Br}}{r_{Rad}} \cdot F_{Br} + \frac{d^2 \phi_{Rad}}{(r_{Rad}) \cdot dt^2} \cdot \theta_{Rad} \cdot$$

Über den Stand der Technik nach der für den Patentanspruch 2 nicht vorveröffentlichten WO 2004/005093 A hinausgehend wird im vorliegenden unabhängigen Patentanspruch 2 nun noch vorgeschlagen, dass bei sich bewegendem Fahrzeug für ein sich nicht drehendes Rad als Schätzwert diejenige Fahrbahnkraft angesetzt wird, die zum Zeitpunkt, als die Radgeschwindigkeit den Wert "Null" erreichte, ermittelt wurde, wodurch die Genauigkeit noch weiter gesteigert wird, was als Aufgabe betrachtet werden kann, die durch den Patentanspruch 2 gelöst wird.

Es wird somit auch für Bremsvorgänge vorgeschlagen, die Massenträgheitsmomente der jeweiligen Fahrzeug-Räder, die beim Abbremsen der Räder auftreten, einzurechnen und somit die Giermomentenkompensation quasi unabhängig von der Ausgestaltung des jeweils zum Einsatz kommenden ABS-Reglers zu machen. Dabei lässt sich die Momentenbilanz um die Drehachse jedes Fahrzeug-Rades durch die folgende Gleichung (5) beschreiben :

$$(5) \qquad 0 = F_{Fahrbahn} \bullet r_{Rad} - F_{Br} \bullet r_{Br} - \Theta_{Rad} \bullet (d^2\phi/dt^2_{Rad})$$

Dabei kann die Winkelbeschleunigung des jeweiligen Rades aus den mit den üblichen Raddrehzahlsensoren gemessenen Radgeschwindigkeitsverläufen ermittelt werden. Die an den jeweiligen Rädern anliegenden Brems-Kräfte ($F_{Br}$) können aus den entweder direkt sensierten Bremsdrücken oder aus vorliegenden Messdaten (z.B. Ventilöffnungszeiten, Vordruck etc. in der hydraulischen Bremsanlage) errechnet werden, so wie dies auch in der bereits genannten DE 197 51 227 A1 erwähnt ist. Eine einfache Umformung dieser soeben genannten Gleichung führt damit zu der zur Ermittlung der Fahrbahnkräfte angegebenen Gleichung. Dabei ist jedoch zu beachten, dass diese als erfindungsgemäße Lösung angegebene Gleichung nur dann gültig ist, solange sich das jeweilige Rad dreht, d.h. solange die Umfangsgeschwindigkeit des jeweiligen Rades ungleich "0" ("Null") ist. Als sinnvolle Annahme zur Ermittlung der jeweiligen Fahr-bahn-Kraft für den Zeitraum während einer Bremsung, in dem die Rad-Umfangsgeschwindigkeit gleich "0" wird und die Fahrzeuggeschwindigkeit ungleich "0" ist, kann abgeschätzt werden, dass sich die Fahrbahn-Kraft beim Übergang vom Wert "ungleich Null" auf den Wert "gleich Null" nicht ändert, d.h. konstant bleibt. Für ein bei sich bewegendem Fahrzeug stillstehendes Rad soll als Wert für die Fahrbahnkraft $F_{Fahrbahn}$ somit derjenige Wert der Fahrbahn-Kraft angenommen werden, der zu dem Zeitpunkt auftrat, als die Rad-Umfangsgeschwindigkeit gerade eben den Wert "0" erreichte.
Die bei der Giermomenten-Kompensation aufgrund von Bremsvorgängen bislang erforderliche Beschränkung auf lediglich kleinen erlaubten Radschlupf muss mit dem vorgeschlagenen Verfahren nicht weiter beachtet werden, da nun das Massenträgheitsmoment des jeweiligen Rades genauestmöglich mit berücksichtigt wird. Die Giermomentenkompensation durch sog. aktiven (fahrerunabhängigen) Lenkeingriff kann somit schneller und genauer reagieren, da die Schlupfregelung des Antiblockiersystems aus der Bilanz herausfällt. Das vorgeschlagene Verfahren kann grundsätzlich sogar ohne ein Antiblockiersystem verwendet werden.
Zurückkommend auf die weiter oben beschriebene Bestimmungs-Gleichung (3) kann im übrigen von dieser Bestimmungs-Gleichung (3) auch dann ausgegangen werden, wenn die angetriebenen Räder lenkbar sind, jedoch muss dann zusätzlich der aktuelle Radlenkwinkel berücksichtigt werden. Hierzu kann bei der Berechnung des sog. Stör-Giermomentes angenommen werden, dass der Krafteinbruch eines Rades infolge einer verzögernden Störkraft (= Differenz der Radkräfte) an dem entsprechenden Rad eingebracht wird. Das entsprechende Störgiermoment wird dann mit einem virtuellen Hebelarm zum Schwerpunkt des Fahrzeugs eingeleitet, wobei dieser Hebelarm vom Lenkwinkel abhängt und zur Berechnung dieses Hebelarmes zu unterscheiden ist, ob der Krafteinbruch am kurvenäußeren oder kurveninneren Rad stattfindet.
Es bezeichne

h      den genannten fiktiven Hebelarm der Störkraft
δ      den Lenkwinkel am jeweiligen Vorderrad
a      die Entfemung der Vorderachse vom Fahrzeug-Schwerpunkt
s      (wieder) die Spurweite des Fahrzeugs
sin   die Sinusfunkktion und
cos   die Cosinusfunktion

Dann ist der Hebelarm am kurvenäußeren Rad: $h_{kurvenaussen} = a \bullet \sin \delta + (s/2) \bullet \cos \delta$ und der Hebelarm am kurveninneren Rad: $h_{kurveninnen} = (s/2) \bullet \cos \delta - a \bullet \sin \delta$
Wie ausgeführt kann somit das zu kompensierende Giermoment mit ausreichender Genauigkeit sehr einfach ermittelt werden, wobei noch darauf hingewiesen sei, dass durchaus eine Vielzahl von Details abweichend von obigen Erläuterungen gestaltet sein kann, ohne den Inhalt der Patentansprüche zu verlassen.

**Patentansprüche**

1. Verfahren zur Durchführung einer aufgrund unterschiedlicher Rad-Drehzahlen auf der linken und der rechten Seite eines zweispurigen Kraftfahrzeugs erforderlichen Giermomentenkompensation mittels eines Lenksystems, das die Einstellung eines fahrerunabhängigen Lenkwinkels an lenkbaren Fahrzeugrädern ermöglicht, wobei das durch geeignete Ansteuerung des Lenksystems zu kompensierende Giermoment aus den an den durch das Fahrzeug-Antriebsaggregat beschleunigten Rädern anliegenden Kräften unter Berücksichtigung des Trägheitsmomentes sowie der Winkelbeschleunigung der betroffenen Fahrzeug-Räder ermittelt wird.

2. Verfahren zur Durchführung einer aufgrund unterschiedlicher Rad-Drehzahlen auf der linken und der rechten Seite eines zweispurigen Kraftfahrzeugs erforderlichen Giermomentenkompensation mittels eines Lenksystems, das die Einstellung eines fahrerunabhängigen Lenkwinkels an lenkbaren Fahrzeugrädem ermöglicht, wobei das durch geeignete Ansteuerung des Lenksystems zu kompensierende Giermoment aus den an den allgemein abgebremsten, sich jedoch im wesentlichen drehenden Rädern anliegenden Fahrbahnkräften ($F_{Fahr\text{-}bahn}$) ermittelt wird, bei deren Berechnung gemäß folgender Gleichung das jeweilige Rad-Massenträgheitsmoment mit berücksichtigt wird

$$F_{Fahrbahn} = \frac{r_{Br}}{r_{Rad}} \cdot F_{Br} + \frac{d^2\phi_{Rad}}{(r_{Rad}) \cdot dt^2} \cdot \theta_{Rad}$$

mit

$F_{Fahrbahn}$ = Kraft, die von der Fahrbahn auf das Rad übertragen wird

$r_{Rad}$ = dynamischer Abrollradius des Rades

$F_{ar}$ = Kraft durch Betätigung der Rad-Bremse

$r_{Br}$ = Radius, an dem die Bremskraft am Rad angreift

$\Theta_{Rad}$ = Trägheitsmoment des Rades

$(d^2\phi/dt^2{}_{Rad})$ = Winkelbeschleunigung des Rades ;

wobei bei sich bewegendem Fahrzeug für ein sich nicht drehendes Rad als Schätzwert diejenige Fahrbahnkraft angesetzt wird, die zum Zeitpunkt, als die Radgeschwindigkeit den Wert "Null" erreichte, ermittelt wurde.

3. Verfahren nach Anspruch 1 oder 2, wobei das zu kompensierende Giermoment ($M_{Gier}$) unter Verwendung des folgenden mathematischen Zusammenhangs ermittelt wird:

$$M_{Gier} = (s/(2 \bullet r_{Rad})) \bullet (r_{Br} \bullet \{F_{Br,li} - F_{Br,re}) + \Theta_{Rad} \bullet (d^2\phi/dt^2{}_{Rad,li} - d^2\phi/dt^2{}_{Rad,re})$$

mit

s = Spurweite

$r_{Rad}$ = dynamischer Abrollradius des Rades

$r_{Br}$ = Radius, an dem die Bremskraft angreift

$F_{Br,li}$ bzw. $F_{Br,re}$ = Bremskraft am linken bzw. rechten Rad

$\Theta_{Rad}$ = Trägheitsmoment des Fahrzeug-Rades

$d^2\phi/dt^2{}_{Rad,li}$ bzw. $d^2\phi/dt^2{}_{Rad,re}$ = Winkelbeschleunigung des linken bzw. rechten Rades

"/" verdeutlicht eine Division, "•" verdeutlicht eine Multiplikation,

"-" bzw. "+" stehen für Subtraktion bzw. Addition

4. Verfahren nach einem der vorangegangenen Ansprüche,
**dadurch gekennzeichnet, dass** bei gelenkten angetriebenen. Rädern der jeweilige Radlenkwinkel über einen fiktiven Hebelarm (h) mit berücksichtigt wird.

**Claims**

1. A method for carrying out a yaw moment compensation required because of different wheel speeds on the left-hand and right-hand side of a two-tracked motor vehicle, by means of a steering system which allows the adjustment of a driver-independent steering angle on steerable vehicle wheels, wherein the yaw moment to be compensated by suitable activation of the steering system is determined from the forces applied at the wheels accelerated by the vehicle drive unit, taking into account the moment of inertia and the angular acceleration of the relevant vehicle wheels.

2. A method for carrying out a yaw moment compensation required because of different wheel speeds on the left-hand and the right-hand side of a two-tracked motor vehicle by means of a steering system which allows the adjustment of a driver-independent steering angle on steerable vehicle wheels, wherein the yaw moment to be compensated by suitable activation of the steering system is determined from the road forces ($F_{road}$) applied to the wheels, which are generally braked, but are, however, substantially rotating, and during the calculation of which forces according to the following equation, the respective wheel-mass moment of inertia is also taken into account

$$F_{road} = \frac{r_{Br}}{r_{wheel}} \cdot F_{Br} + \frac{d^2\phi_{wheel}}{(r_{wheel}) \cdot dt^2} \cdot \theta_{wheel}$$

wherein
$F_{road}$ = force, which is transmitted by the road to the wheel
$r_{wheel}$ = dynamic rolling radius of the wheel
$F_{Br}$ = force through actuation of the wheel brake
$r_{Br}$ = radius, on which the braking force on the wheel engages
$\theta_{wheel}$ = moment of inertia of the wheel
$(d^2\emptyset/dt^2_{wheel})$ = angular acceleration of the wheel;
wherein when the vehicle is moving, the road force, which was determined at the instant when the wheel speed reached the value "zero" is set for a non-rotating wheel as an estimate.

3. A method according to claim 1 or 2, wherein the yaw moment ($M_{yaw}$) to be compensated is determined using the following mathematical relationship:

$$M_{yaw} = (s/(2 \bullet r_{wheel})) \bullet (r_{Br} \bullet (F_{Br,li} - F_{Br,re}) + \theta_{wheel} \bullet (d^2\emptyset/dt^2_{wheel,li} - d^2\emptyset/dt^2_{wheel,re})$$

wherein
s = track width
$r_{wheel}$ = dynamic rolling radius of the wheel
$r_{Br}$ = radius, on which the braking force engages
$F_{Br,li}$ or $F_{Br,re}$ = braking force on the left-hand or right-hand wheel
$\theta_{wheel}$ = moment of inertia of the vehicle wheel
$d^2\emptyset/dt^2_{wheel,li}$ or $d^2\emptyset/dt^2_{wheel,re}$ = angular acceleration fo the left-hand or right-hand wheel
"/" shows a division, "•" shows a multiplication, "-" and "+" stand for subtraction and addition

4. A method according to any one of the preceding claims, **characterised in that** in the case of steered driven wheels, the respective wheel steering angle is also taken into account via a notional lever arm (h).

**Revendications**

1. Procédé pour la réalisation d'une compensation du couple de lacet requise en raison de vitesses de rotation différentes sur le côté gauche et le côté droit d'un véhicule à moteur à deux voies, au moyen d'un système de direction qui permet l'ajustement de l'angle de braquage indépendant du conducteur sur des roues directrices d'un véhicule, le couple de lacet que doit compenser une commande appropriée du système de direction étant déterminé à partir des forces appliquées sur les roues accélérées par le groupe d'entraînement du véhicule compte tenu du couple d'inertie ainsi que de l'accélération angulaire des roues concernées du véhicule.

2. Procédé pour la réalisation d'une compensation du couple de lacet requise en raison de vitesses de rotation différentes sur le côté gauche et le côté droit d'un véhicule à moteur à deux voies, au moyen d'un système de direction qui permet l'ajustement de l'angle de braquage indépendant du conducteur, le couple de lacet que doit compenser une commande appropriée du système de direction étant déterminé à partir des forces exercées par la chaussée ($F_{chaussée}$) sur les roues en général freinées mais tournant pour l'essentiel, lors du calcul de laquelle selon l'équation ci-dessous, le couple d'inertie de masses de la roue est aussi pris en compte

$$F_{chaussée} = \frac{r_{Fr}}{r_{roue}} \cdot F_{Fr} + \frac{d^2\varphi_{roue}}{(R_{roue}) \cdot dt^2} \cdot \theta_{roue}$$

où

$F_{chaussée}$ = force qui est transmise à la roue par la chaussée

$r_{roue}$ = rayon de déroulement dynamique de la roue

$F_{Fr}$ = force exercée par l'actionnement du frein de roue

$r_{Fr}$ = rayon sur lequel la force de freinage agit sur la roue

$\theta_{roue}$ = couple d'inertie de la roue

$d^2\varphi/dt^2_{roue}$ = accélération angulaire de la roue ;

la force exercée par la chaussée prise comme valeur estimée pour une roue qui ne tourne pas sur un véhicule en mouvement étant celle qui a été déterminée au moment où la vitesse de la roue atteignait la valeur"zéro".

3. Procédé selon la revendication 1 ou 2, le couple de lacet ($M_{lacet}$) à compenser étant déterminé avec l'équation mathématique ci-dessous :

$$M_{lacet} = (s/(2{*}r_{roue}))^*(r_{Fr}{*}(F_{Fr,ga} - F_{Fr,dr}) + \theta_{roue} {*} (d^2\varphi/dt^2_{roue,\,ga]} - d^2\varphi/dt^2_{roue,\,dr})$$

s = écartement des roues,

rroue = rayon de déroulement dynamique de la roue,

$r_{Fr}$ = rayon sur lequel la force de freinage agit,

$F_{Fr,ga}$ ou $F_{Fr,dr}$ = force de freinage sur la roue gauche ou la roue droite,

$\theta_{roue}$ = couple d'inertie de la roue d'un véhicule,

$d^2\varphi/dt^2_{roue,\,ga}$ ou $d^2\varphi/dt^2_{roue,\,dr}$ = accélération angulaire de la roue gauche ou de la roue droite,

"/" signifie une division, "*" une multiplication,

"-" une soustraction, "+" une addition.

4. Procédé selon l'une quelconque des revendications précédentes,
   **caractérisé en ce qu'**
   avec des roues entraînées braquées, l'angle de braquage des roues respectif est également pris en compte par un bras de levier (h) fictif.